# EUROPEAN PATENT SPECIFICATION

(11) **EP 0 866 036 B1**
(45) Date of publication and mention of the grant of the patent: **15.09.2004**
(21) Application number: 98302066.0
(22) Date of filing: 19.03.1998
(51) Int. Cl.: C03B 9/447

(54) **Drive mechanism for a tong arm**
Getriebe für ein Ausnehmmechanismus
Mécanisme d'entraînement pour un bras extracteur

(30) Priority: 22.03.1997 GB 9705973
(43) Date of publication of application: 23.09.1998
(73) Proprietor: VHC, Ltd., Winchester, Indiana 47394 (US)
(72) Inventor: Bowdon, David Jeffrey, Warden Law, Houghton-le-Spring, DH5 8LX (GB)
(74) Representative: Chettle, Adrian John

(56) References cited:
- EP-A- 0 145 255
- EP-A- 0 217 590

## Description

The present invention relates to a drive mechanism for a tong arm of an I.S. glass moulding machine.

Generally, glass bottles and similar articles are produced in apparatus known as an Individual Section (I.S.) moulding machine. Such a machine comprises a plurality of independently operable mould sections, and a conveyor to remove finished bottles. Each mould section includes a blank mould, a blow mould, and a tong arm to transfer the finished glass product from the blow mould to a dead plate or to a conveyor.

The tong arm is pivotable about the machine frame and comprises a housing having three internal gears meshed in series, or a chain about two spaced gears. The outer end gear of the tong arm has tongs for grasping a neck of a bottle; the inner of the end gears being held stationary relative the machine frame by means of a retaining shaft journalled in the wall of the housing. The housing is reciprocated by a suitable drive and, due to the internal gear arrangement, the tongs remain downwardly extending whilst moving the freshly moulded bottle in an arc to the dead plate or conveyor. The initial orientation of the tongs may be adjusted by arcuate movement of the retaining shaft, following which the shaft is fixed relative to the housing.

The machine frame comprises a series of relatively massive castings and thus normal practice is to refit an existing machine frame (which may be rather old) rather than manufacture an entirely new machine. Furthermore in the interests of interchangeability, new machines tend to be manufactured to the general frame dimensions of old machines. In addition, since the machinery is modular, there are severe constraints on space within each individual section due to the existing machine frame dimensions. Accordingly, the drive for the tong arm must be compact. A typical arrangement comprises a rack arranged vertically in the machine frame, and meshed with a pinion fixed to the tong arm housing. The pinion is journalled on the retaining shaft by a plain bearing and is connected to the tong arm drive housing by a sleeve, the shaft itself being cantilevered in the machine frame.

The rack is driven by a double acting air cylinder situated below. The cylinder cannot be placed above due to space constraints of the machine frame and as a consequence of the length of the rack.

It is important that the motion of the tong arm be smooth, because rapid acceleration or deceleration could cause a freshly moulded bottle held in the tongs to be deformed. Also, the motion must be predictable and accurate in order to ensure that the tongs grasp the bottle neck in exactly the correct place. Incorrect grasping could damage the relatively soft newly moulded bottle, or introduce stress that could weaken the bottle and cause subsequent breakage.

A rack and pinion introduces backlash and lost motion into the mechanism. Furthermore the gears must be separately assembled to the machine frame, which can result in a matched gear set being disturbed. The actuation system is not ideal because air is compressible and so the system is resilient. Accordingly, the motion of a typical tong arm is neither precise nor easily controlled, and freshly moulded bottles may be subjected to a somewhat rough pick up, jerky transfer and harsh landing.

One modification in view of the above problems has been to use a proportioning valve and position transducer in a simple proportional air control circuit, to better control acceleration and deceleration of the rack. However, because air is compressible, the movement of the tong arm is still not precise.

An alternative is to provide a ballscrew on the end of the rack together with an electric stepper motor. This eliminates the 'bounce' of an air system but inevitably introduces a further source of backlash and lost motion.

In order to reduce backlash in the system, more precise gears could be used, but they are expensive. Moreover, as noted above, in order to enable easy assembly of components, the rack gear and pinion are split into two units. The rack is provided in the rack housing and the pinion is bolted to the tong arm drive housing. Accordingly, matching of finely machined gears after such separation with minimal backlash may be difficult. More precise control might be achieved with a larger pinion, but that would increase the required length of rack which would be very difficult to accommodate given the space constraints within the machine frame.

Another disadvantage of the existing rack and pinion arrangement is that servicing is extremely difficult due to the drive being inboard of the conveyor, and the air cylinder/stepper motor being located deep in the machine frame.

According to the invention there is provided an object of the present invention is to provide an improved mechanism alleviating many of the problems described above. A gearbox for a tong arm of an I.S. glass moulding machine, the tong arm comprising a drive housing, tongs and positioning gears to permit adjustment of the relative orientation of the tongs with respect to the housing, the gearbox having a right angle drive and comprising a casing, an input drive gear journalled in the casing, an output drive gear in mesh with the input drive gear and journalled in the casing at right angles to the input drive gear, an output sleeve rotationally fast with the output drive gear and adapted for attachment to said drive housing, and a position fixing shaft journalled in the casing, projecting axially through the output gear and sleeve, and adapted for attachment to a positioning gear for the tongs of said tong arm drive housing whereby the initial orientation of the tongs may be adjusted with respect to said tong arm drive housing.

Such an arrangement has the advantage that the tong arm drive housing is supported for arcuate movement on the casing rather than on the shaft. More massive bearings may thus be provided giving better support for the tong arm and less risk of distortion. This in turn means that more precise tong arm movement is possible. Another advantage is that the gearbox is separate and may be attached and detached to the machine frame as a unit, thus making maintenance relatively easy as compared with prior rack and pinion arrangements.

The casing preferably includes an annular support cover, or collar, in which the shaft is journalled, the cover comprising a hollow shaft portion and a radial flange portion at one end thereof, the flange portion being attachable to said casing and providing a support surface for a bearing of the output gear, and the support cover further including retaining means to retain said shaft against rotation relative thereto. The retaining means may comprise an end face of the support cover for abutment with a shoulder of said shaft, and locking means adapted to urge said end face and shoulder into binding engagement.

The shaft may include a fluid passageway extending axially therein to permit control of the tongs by air pressure. The cover may include a fluid passageway defined in the hollow shaft portion and extending from the outer face of said flange portion to the interior of said shaft portion, thereby to connect with a cross passage of the shaft which in turn is connected with said fluid passageway.

Preferably, the input gear is a worm, and said output gear is a worm wheel meshed directly with said worm. The worm may have a concave axial profile. The worm wheel may also have a concave axial profile to correspond with the worm. The concave profile permits greater tooth contact and thus the worm wheel may have enhanced power transmission characteristics. A further inherent advantage of a worm drive is that it may not be reverse driven, i.e. the drive may not be driven by motion of the tong arm. The tong arm casing is of course movable arcuately in both directions with drive from the worm.

Such an arrangement reduces backlash significantly since a single high precision right angle drive is provided. Since the shaft is not used to support the tong arm assembly, distortion is reduced, so permitting tolerances to be reduced.

Preferably, the gearbox is driven by an electric motor. The electric motor may be a stepper motor, and thus the motion of the tong arm may be controlled accurately without recourse to feedback control. The motor may be oriented above the gearbox, within the existing machine frame constraints, to permit easy access for maintenance.

Further preferred features of the invention will be appreciated from the following description of a specific embodiment of the invention as illustrated in the accompanying drawings in which
Figure 1 is a somewhat schematic view of part of an I.S. moulding machine incorporating the invention,
Figure 2 shows a front elevation of a gearbox in accordance with the present invention, and

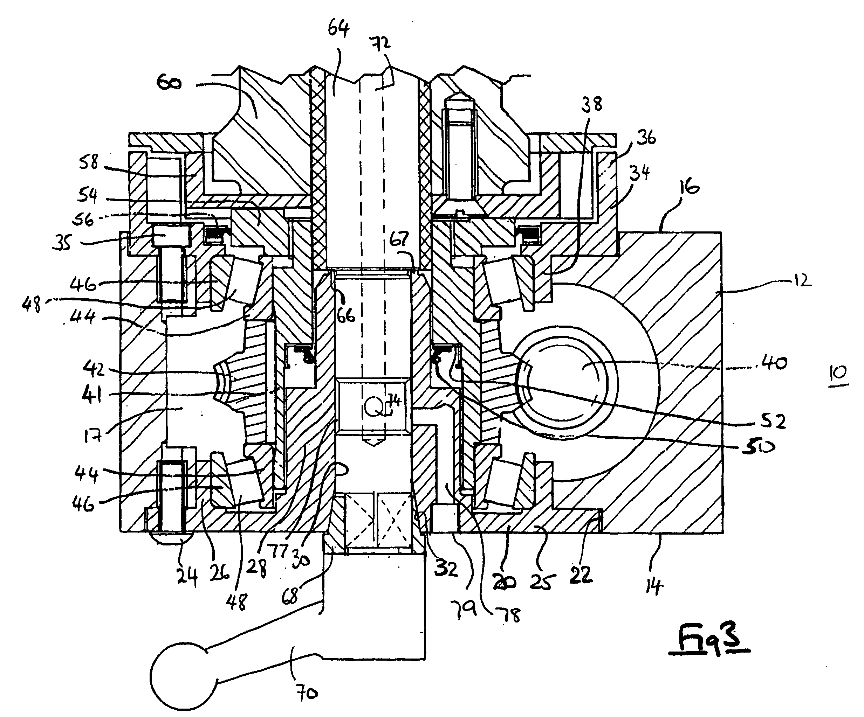

Figure 3 shows a cross-section of the gearbox of Figure 2 in the plane indicated II-II.

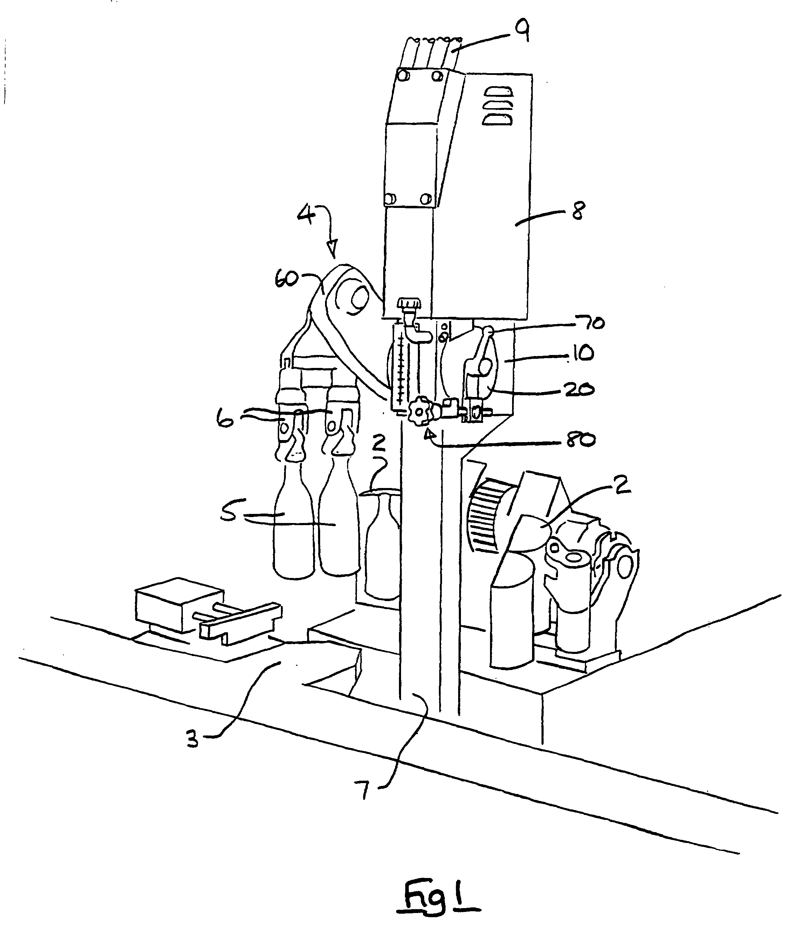

Referring to Figure 1, a typical I.S. moulding machine includes a blow mould 2 having a double cavity and a dead plate 3. Figure 1 shows the blow mould open; the machine frame and other parts of the I.S. moulding machine are omitted for clarity. A tong arm 4 pivots through 180° to transport two freshly moulded bottles 5 from the mould 2 to the dead plate 3. The necks of the bottles 5 are gripped by tongs 6 supplied with air under pressure through a duct in the tong arm 4.

A stand 7 supports a gearbox 10 and electric stepper motor 8 supplied with power via electrical cables 9 from above. As will be explained in greater detail, the tong arm 4 is pivoted in the casing of gearbox 9 and driven through a right angled gear arrangement from the motor 8 which in the preferred embodiment has a vertical axis. The stand 7 can be of any suitable configuration to suit the available space in the machine frame.

The gearbox 10 has a generally cuboidal casing 12, with a front face 14, a rear face 16 and an internal cavity 17. A circular front cover plate 20 is bolted into a complementary recess 22 in the front face 14 of the housing 12, by a plurality of radially spaced bolts 24.

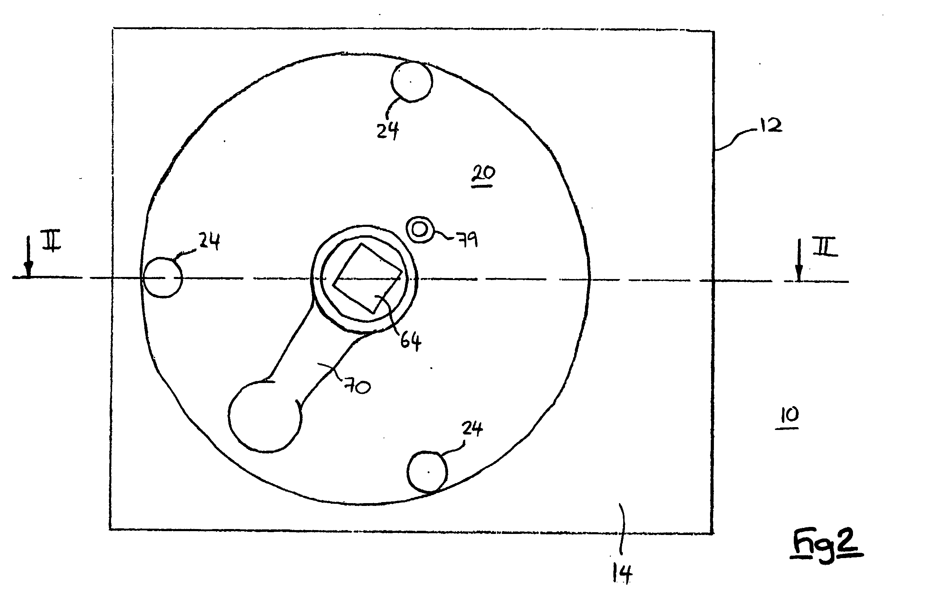

The nature of the front cover 20 is best illustrated in Figure 2. The cover 20 comprises a radial flange 25 and an axially extending annular flange 26, radially inwardly spaced of the bolts 24, and a concentric tubular portion 28 inward of the annular flange 26. Those portions extend through an aperture in the casing 12 into the cavity 17. The tubular portion 28 defines a throughbore 30 of the cover 20. The throughbore 30 is generally uniform, with an outwardly tapered portion 32 at the end adjacent the front face 14. The cover 20 is located in the casing 12 by the flange 26 as illustrated.

To one side of the tubular portion 28 of the front cover, a worm 40 is journalled in the casing so as to be aligned perpendicular to the axis of the tubular portion 28. The worm 40 is in use driven by the stepper motor 8, and so the worm 40 provides the input to the gearbox 10 in use. The worm 40 is generally concave in profile so as to engage more effectively with a correspondingly profiled gear. The stepper motor 8 is relatively short, and can be accommodated within an existing machine frame. A reduction gear may be provided between the motor 8 and worm 40 if desired.

A circular rear guard plate 34 is fixed by bolts 35 into a recess in the rear face 16 of the housing so as to be coaxial with the tubular portion 28. The rear guard plate 34 has an outwardly extending peripheral annular flange 36. Moreover, the rear guard plate 34 has an inwardly extending annular flange 38, corresponding to the annular flange 26 of the front cover 20, which locates the plate 34 with respect to the casing 12.

A generally tubular drive sleeve 41 is rotatable about the tubular portion 28. Keyed on the drive sleeve 41 is a gear 42 engaged with the worm 40, the gear 42 being generally concave in profile to engage the worm 40 effectively.

The drive sleeve 41 is borne by two roller bearings comprising inner and outer races 44,46 between which are provided rollers 48. The outer races 46 are supported on the flanges 26,38, and the inner races 44 on the drive sleeve. By supporting the outer races on the flanges 26, 38, the outer races are located directly relative the throughbore 30. Accordingly, the possibility of an error through build up of tolerances is minimised. The bearings are generally directed towards each other so as to support the drive sleeve in the housing 12. An annular seal 50 is interposed between the drive sleeve 41 and the tubular portion 28, at an interior shoulder 52 of the drive sleeve 40.

The drive sleeve 41 extends generally perpendicularly to the plane of the rear face 16 of the casing 12. A collar 54 is engaged by e.g. a screw thread with the end of the drive sleeve 41 at the rear face 16. An annular seal 56 is interposed between the collar 54 and the guard plate 34.

Attached to the collar 54 is a drive collar 58, which is adapted to be attached to a conventional tong arm housing 60.

A shaft 64 extends in use from tong arm drive housing and passes through the throughbore 30 of the cover 20. The shaft has a shoulder 66 which abuts an end face 67 of the tubular portion 28. The shaft extends through to the front face 14, where it is fitted with a tapered collar 68 adapted to co-operate with the tapered portion 32 of the bore 30, and a screw threaded handle 70. The shaft is retained against movement relative the tubular portion 28 and therefore relative the casing 12 by abutment of the shoulder 66 with the tubular portion 28 and by abutment of the two tapered surfaces together. In that way, the initial position of the tongs of the tong arm can be fixed, and may be adjusted by loosening the handle 70 and rotating the shaft 64 relative to the casing 12. Incremental adjustment can be provided by the screwed adjuster 80 illustrated in Figure 1.

The shaft 64 has an axial bore 72, extending from the tong arm to a point near the handle end of the shaft. The bore is intersected by a crossbore 74 extending radially to the periphery of the shaft. A portion of the shaft 64 about the aperture 76 is stepped inwardly so that it has a radius substantially smaller than the throughbore 30. Accordingly, an annular chamber 77 is formed between the shaft 64 and the tubular portion 28.

An input channel 78 extends from an aperture 79 in the front face of the cover 20 through to the inner surface of the tubular portion 28, so as to correspond with the annular chamber 77. In that way, an air supply may be passed from the aperture 79 in the cover to the bore 72 in the shaft 64, and from there to the tong arm. Such an air supply may be used to control the tongs of the tong arm in a conventional manner.

In use, a stepper motor is used to drive the worm 40. The worm drives the gear 42, which causes the drive sleeve 41, the collar 54, the drive collar 58, and the tong arm housing 60 to rotate in unison relative the housing. Since the shaft 64 is held stationary in the housing, the tong arm swings across in an arc as previously described while the tongs 6 are maintained in their predetermined orientation. The tongs 6 are operated in conventional manner by an air supply through aperture 79 in the cover 20.

The stepper motor is relatively short and can be accommodated above the tong arm, thus facilitating maintenance. Furthermore the gearbox may be positioned at any angle around the axis of shaft 64, thus facilitating accommodation of the motor at any suitable orientation.

As illustrated in Figure 1, the motor and gearbox are easily accessible from the side for maintenance and replacement. Typically the gearbox/tong arm/motor assembly is attached to the stand 7 by a few bolts and can thus be replaced as a unit after disconnection of the air supply and electrical cabling - suitable quick connectors can be incorporated. Disassembly of the gearbox in situ is not necessary and thus the predetermined relationship between the gears 40,42 need not be disturbed.

Furthermore, the motor 8 may be easily removed in situ from the gearbox, or the tong arm 4 removed in situ from the drive collar 58. Downtime for repair or replacement is minimised.

Finally, the air supply and electrical cabling are situated above the mould and thus not susceptible to damage due to debris, lubricants and the like from the vicinity of the mould.

## Claims

1. A gearbox (10) for a tong arm of an I.S. glass moulding machine, the tong arm (4) comprising a drive housing (60), tongs and positioning gears to permit adjustment of the relative orientation of the tongs with respect to the housing, the gearbox having a right angle drive and comprising a casing (12), an input drive gear (40) journalled in the casing (12), an output drive gear (42) in mesh with the input drive gear (40) and journalled in the casing (12) at right angles to the input drive gear (40), an output sleeve (41) rotationally fast with the output drive gear (42) and adapted for attachment to said drive housing (60), and a position-fixing shaft (64) journalled in the casing (12), projecting axially through the output gear (42) and sleeve (41), and adapted for attachment to a positioning gear for the tongs of said tong arm drive housing whereby the initial orientation of the tongs may be adjusted with respect to said tong arm drive housing.

2. A gearbox according to claim 1 wherein said casing includes an annular support cover (20) with a hollow shaft portion (28) in which said shaft (64) is journalled, the cover (20) further comprising a radial flange (25) and an axially extending annular flange (26) at one side thereof, the cover (20) being attached to said casing (12) and said annular flange (26) providing a support surface for a bearing (48) of the output drive gear (42), and the support cover further including retaining means (32) adapted to retain said shaft (64) against rotation relative thereto.

3. A gearbox according to claim 2 wherein said retaining means (32) comprise an end face (67) of the support cover (20) for abutment with a shoulder (66) of said shaft (64), and locking means (68,70) adapted to urge said end face (67) and shoulder (66) into binding engagement.

4. A gearbox according to any preceding claim wherein said shaft (64) includes a fluid duct (72) extending axially therein to permit opening and closing of tongs by air pressure.

5. A gearbox according to claim 4 wherein said cover (20) includes a fluid passageway (78) defined in the hollow shaft portion (28) and extending from the outer face of said radial flange (25) to the interior of said shaft portion (28), thereby to connect with a cross passage (74) of the shaft (64) which in turn is connected with said fluid duct (72).

6. A gearbox according to any preceding claim wherein said input drive gear (40) is a worm, and said output drive gear (42) is a worm wheel meshed directly with said worm (40).

7. A gearbox according to claim 6 wherein said worm (40) has a concave tooth profile.

8. A drive assembly for a tong arm of an I.S. glass moulding machine, and comprising a gearbox according to any preceding claim and an electric motor (8) connected to said input drive gear (40).

9. A drive assembly according to claim 8 wherein said electric motor is a stepper motor.

10. A drive assembly according to claim 8 or claim 9, whereby said motor is placed above said gearbox.

## Patentansprüche

1. Getriebe (10) für den Ausnehmerarm einer IS-Glasformmaschine, deren Ausnehmerarm (4) aufweist: ein Antriebsgehäuse (60), Ausnehmer und Positionierzahnräder bzw. Zahnungen, die ein Justieren der Ausrichtung der Ausnehmer relativ zum Gehäuse erlauben, wobei das Getriebe einen 90°-Winkeltrieb hat und ein Gehäuse (12) umfaßt, ein im Gehäuse (12) drehbar gelagertes Eingangsantriebszahnrad (40), ein mit dem Eingangszahnrad (40) kämmendes Ausgangsantriebszahnrad (42), das im Gehäuse (12) rechtwinklig zum Eingangsantriebszahnrad (40) drehbar gelagert ist, eine Ausgangshülse (41), die drehfest mit dem Ausgangsantriebszahnrad (42) verbunden und an das Antriebsgehäuse (60) ansetzbar ist, und eine Stellungs-Arretierwelle (64) aufweist, die im Gehäuse (12) drehbar gelagert ist und axial durch das Ausgangszahnrad (42) und die Hülse (41) verläuft und an ein Positionierzahnrad für die Ausnehmer des Ausnehmerarm-Antriebsgehäuses ansetzbar ist, wodurch die Anfangsausrichtung der Ausnehmer relativ zum Ausnehmerarm-Antriebsgehäuse verstellbar ist.

2. Getriebe nach Anspruch 1, dessen Gehäuse einen ringförmigen Lagerdeckel (20) mit einem hohlen Wellenteil (28) aufweist, in dem die Welle (64) gelagert ist, wobei der Deckel (20) weiterhin einen radialen Flansch (25) und auf dessen einer Seite einen axial sich erstreckenden ringförmigen Flansch (26) hat und so an das Gehäuse (12) angesetzt ist, dass der ringförmige Flansch (26) eine tragende Fläche für ein Lager (48) des Ausgangsantriebszahnrads (42) bildet, und wobei der Lagerdeckel weiterhin eine Rückhalteeinrichtung (32) aufweist, mit der die Welle (64) gegen eine Drehung relativ zu ihr arretierbar ist.

3. Getriebe nach Anspruch 2, bei der die Rückhalteeinrichtung (32) eine Stirnfläche (67) des Lagerdeckels (20), die an einen Absatz (66) der Welle (64) anlegbar ist, sowie eine Sperreinrichtung (68, 70) aufweist, mit der die Stirnfläche (67) mit dem Absatz (66) verklemmbar ist.

4. Getriebe nach einem der vorgehenden Ansprüche, dessen Welle (64) einen Fluidkanal (72) aufweist, der sich axial durch sie erstreckt und das Öffnen und Schließen der Ausnehmer durch Luftdruck ermöglicht.

5. Getriebe nach Anspruch 4, dessen Deckel (20) im hohlen Wellenteil (28) einen Fluidkanal (78) aufweist, der von der Außenfläche des radialen Flansches (25) zum Inneren des Wellenteils (28) verläuft und dort mit einem Querkanal (74) in der Welle (64) verbunden ist, der seinerseits zum Fluidkanal (72) führt.

6. Getriebe nach einem der vorhergehenden Ansprüche, dessen Eingangsantriebszahnrad (40) eine Schnecke und das Ausgangsantriebszahnrad (42) ein Schneckenrad ist, das direkt mit der Schnecke (40) kämmt.

7. Getriebe nach Anspruch 6, dessen Schnecke (40) ein konkaves Zahnprofil hat.

8. Antriebsanordnung für einen Ausnehmerarm einer IS-Glasformmaschine mit einem Getriebe nach einem der vorgehenden Ansprüche sowie einem Elektromotor (8), der mit dem Eingangsantriebszahnrad (40) verbunden ist.

9. Antriebsanordnung nach Anspruch 8, deren Elektromotor ein Schrittschaltmotor ist.

10. Antriebsanordnung nach Anspruch 8 oder 9, bei der der Motor über dem Getriebe angeordnet ist.

## Revendications

1. Botte d'engrenages (10) pour un bras extracteur d'une machine de moulage de verre I.S., le bras extracteur (4) comprenant un boîtier d'entraînement (60), des pinces et des engrenages de positionnement pour permettre le réglage de l'orientation relative des pinces par rapport au boîtier, la boîte d'engrenages contenant une transmission à angle droit et comprenant un carter (12), un engrenage d'entraînement d'entrée (40) monté de façon tournante dans le carter (12), un engrenage d'entraînement de sortie (42) en prise avec l'engrenage d'entraînement d'entrée (40) et monté de façon tournante dans le carter (12) perpendiculairement à l'engrenage d'entraînement d'entrée (40), un manchon de sortie (41) solidaire en rotation de l'engrenage d'entraînement de sortie (42) et prévu pour fixation au dit boîtier d'entraînement (60), et un arbre (64) de fixation de position monté de façon tournante dans le carter (12), s'étendant axialement à travers l'engrenage de sortie (42) et le manchon (41), et prévu pour fixation à un engrenage de positionnement des pinces du dit boîtier d'entraînement de bras extracteur, de sorte que l'orientation initiale des pinces peut être ajustée par rapport au dit boîtier d'entraînement de bras extracteur.

2. Boîte d'engrenages selon la revendication 1, dans laquelle le dit carter comprend un couvercle de support annulaire (20) ayant une partie de réception d'arbre creuse (28) dans laquelle le dit arbre (64) est reçu de façon tournante, le couvercle (20) comprenant en outre une bride radiale (25) et un rebord annulaire s'étendant axialement (26) sur une face de la bride, le couvercle (20) étant fixé au dit carter (12) et le dit rebord annulaire (26) constituant une surface de support pour un palier (48) de l'engrenage d'entraînement de sortie (42), et le couvercle de support comprenant en outre un moyen de retenue (32) prévu pour retenir le dit arbre (64) contre une rotation par rapport au couvercle.

3. Boîte d'engrenages selon la revendication 2, dans laquelle le dit moyen de retenue (32) comprend une face d'extrémité (67) du couvercle de support (20) qui bute contre un épaulement (66) du dit arbre (64), et des moyens de blocage (68, 70) prévus pour presser la dite face d'extrémité (67) et le dit épaulement (66) en contact de liaison mutuelle.

4. Boîte d'engrenages selon une quelconque des revendications précédentes, dans laquelle le dit arbre (64) comporte un conduit de fluide (72) qui s'étend axialement à l'intérieur de l'arbre pour permettre l'ouverture et la fermeture des pinces par pression d'air.

5. Boîte d'engrenages selon la revendication 4, dans laquelle le dit couvercle (20) comporte un passage de fluide (78) défini dans la partie de réception d'arbre creuse (28) et s'étendant de la face extérieure de la dite bride radiale (25) jusqu'à l'intérieur de la dite partie de réception d'arbre (28) afin de se raccorder à un passage transversal (74) de l'arbre (64), qui est lui-même en communication avec le dit conduit de fluide (72).

6. Boîte d'engrenages selon une quelconque des revendications précédentes, dans laquelle le dit engrenage d'entraînement d'entrée (40) est une vis sans fin, et le dit engrenage d'entraînement de sortie (42) est une roue à vis sans fin qui engrène directement avec la dite vis sans fin (40).

7. Boîte d'engrenages selon la revendication 6, dans laquelle la dite vis sans fin (40) a un profil de denture concave.

8. Dispositif d'entraînement pour un bras extracteur d'une machine de moulage de verre à sections individuelles I.S., et comprenant une boîte d'engrenages selon une quelconque des revendications précédentes et un moteur électrique (8) accouplé au dit engrenage d'entraînement d'entrée (40).

9. Dispositif d'entraînement selon la revendication 8, dans lequel le dit moteur électrique est un moteur pas à pas.

10. Dispositif d'entraînement selon la revendication 8 ou la revendication 9, dans lequel le dit moteur est placé au-dessus de la dite boîte d'engrenages.
